# EUROPEAN PATENT SPECIFICATION

(11) **EP 2 084 625 B1**
(45) Date of publication and mention of the grant of the patent: **12.01.2011**
(21) Application number: 07826719.2
(22) Date of filing: 12.10.2007
(51) Int. Cl.: G06F 17/30

(54) **DOMINANT COLOR DESCRIPTORS**
DESKRIPTOREN FÜR DOMINIERENDE FARBEN
DESCRIPTEURS DE COULEURS DOMINANTES

(30) Priority: 19.10.2006 EP 06122592
(43) Date of publication of application: 05.08.2009
(73) Proprietor: Koninklijke Philips Electronics N.V., 5621 BA Eindhoven (NL)
(72) Inventor: PETERS, Marc A., 5656 AE Eindhoven (NL); FONSECA, Pedro, 5656 AE Eindhoven (NL)
(74) Representative: Uittenbogaard, Frank
(86) International application number: PCT/IB2007/054154
(87) International publication number: WO 2008/047280

(56) References cited:
- KA-MAN WONG ET AL: "MPEG-7 dominant color descriptor based relevance feedback using merged palette histogram" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, vol. 3, 17 May 2004 (2004-05-17), pages 433-436, XP010718219 ISBN: 0-7803-8484-9
- TONG LIN ET AL: "Integrating color and spatial features for content-based video retrieval" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 592-595, XP010563419 ISBN: 0-7803-6725-1
- ABDEL-MOTTALEB M ET AL: "MPEG -7: a content description standard beyond compression" CIRCUITS AND SYSTEMS, 2000. 42ND MIDWEST SYMPOSIUM ON AUGUST 8 - 11, 1999, PISCATAWAY, NJ, USA,IEEE, 8 August 1999 (1999-08-08), pages 770-777, XP010511065 ISBN: 0-7803-5491-5
- ROBERT O'CALLAGHAN ET AL: "MPEG-7 Visual-Temporal Clustering for Digital Image Collections" INFORMATION RETRIEVAL TECHNOLOGY LECTURE NOTES IN COMPUTER SCIENCE;;LNCS, SPRINGER-VERLAG, BE, vol. 3689, 2005, pages 339-350, XP019020790 ISBN: 3-540-29186-5

## Description

### FIELD OF THE INVENTION

The invention relates to visual color descriptors, and more particularly to dominant color descriptors relating to one or more images.

### BACKGROUND OF THE INVENTION

The MPEG-7 standard, which has been under development by the MPEG standardization committee in the recent years, defines a standard for providing descriptions of multimedia content. One of the descriptors specified in this standard is called 'dominant color descriptor. This descriptor aims to describe global as well as local spatial color distribution in images for high-speed retrieval and browsing. In contrast to e.g. the color histogram approach, this descriptor arrives at a much more compact representation at the expense of lower performance in some applications. Colors in a given region are clustered into a small number of representative colors. The descriptor consists of the representative colors, their percentages in a region, spatial coherency of the color, and color variance. See: "The MPEG-7 visual standard for content description-An overview" by T. Sikora, in: IEEE Trans. on circuits and systems for video technology, Vol. 11. No. 6, 2001.

The dominant color descriptor represents color with a set of up to 8 three-dimensional vectors, representing the most dominant colors in an image or part of an image. In addition to the standard, the MPEG standardization committee also provided an MPEG-7 experimentation model, in which example extraction algorithms are described for most of the visual descriptors defined in the standard. Among others, example extraction code for the dominant color descriptor is provided. Also, a similarity measure to compare two dominant color descriptors is suggested in this experimental model. The dominant color descriptor is applied for example for clustering images with respect to their dominant colors. Typically, this requires the ability to compute an average of two or more dominant color descriptors.

Given (part of) an image and a color space (e.g. RGB, HSV, LUV), the MPEG-7 dominant color descriptor defines up to 8 colors in that color space that represent the most dominant colors in that image. Each dominant color is represented by:
- a three-dimensional vector (for example R, G, and B) representing the color;
- a percentage indicating the relative number of pixels that contribute to that color in the image; and
- a parameter indicating the variance of the colors of the pixels that contribute to that dominant color, being either 0 (low variance) or 1 (high variance).

The dominant color descriptor further comprises a non-uniformly defined parameter representing spatial coherency (indicating whether the different colors of the image are clustered together or rather scattered among the image).

As an example, the dominant color descriptor can be extracted by clustering the pixels in the image into a maximum of 8 groups based on their color. Each group is represented by a color consisting of a list of components, for example a list of the three components R, G, and B of the RGB color space. The percentage indicates how many pixels in the image are assigned to the cluster. The variance is 1 if the variance for a specific cluster is relatively high (above a particular threshold), 0 otherwise. The spatial coherency is large if the elements of the clusters are generally widely spread throughout the image. A more detailed description of an extraction algorithm is provided in the MPEG-7 experimentation model. In this document, also a similarity measure or distance measure is suggested that can be used to compare two dominant color descriptors.

However, when grouping a set of dominant color descriptors, for example in a clustering algorithm, one needs to define a center or mean value for a cluster of images represented by their respective dominant color descriptors. The most logical choice for this would be to take the average of the Dominant Color descriptors. However, simply averaging the components of the dominant color descriptor does not necessarily lead to a satisfying result.

EP 1 494 132 A1 describes a method of representing a group of images by determining the values of one or more dominant colors for the group of images and deriving a dominant color representation expressing the group of images in terms of one or more of said dominant color values. It discloses that in general terms, the image descriptors are combined by merging clusters in the images based on proximity of the clusters in color space. The pair of dominant colors giving the smallest distance measurement are selected to be merged. The dominant or representative color value of the merged cluster is a weighted average of the dominant colors of the two clusters, where the weight is a measure of the relative significance of each dominant color in the image. The variance of the merged cluster is also calculated, using the variances of the two clusters merged together. Each color component is treated independently, and it is assumed that the variance of the merged cluster is a weighted sum of two Gaussian distributions. The patent application describes that the merging operates on the values in the descriptors, i.e. dominant color, variance, and weight, and it does not analyze the clusters themselves.

The same patent application also discloses a second embodiment in which the images are aggregated in the image or pixel domain, and then a dominant color descriptor is derived from the aggregated image to produce a GroupOfFrames/GroupOfPictures dominant color descriptor. Thus, if there are N images in the group, each image containing m×m pixels, the super-image can be considered as an (N×m)×m array of pixels. This second embodiment works directly with the images.

In "Integrating Color and Spatial Features for Content-Based Video Retrieval" by Lin et al., published in The Proceedings of the IEEE 2001 International Conference on Image Processing, Thessaloniki, Greece, Oct. 7-10, 2001, Vol. 1, pages 592-595, a method is described whereby color histograms for each frame are generated. The color objects with the largest number of pixels are identified as dominant color objects. Subsequently, only dominant colors from a plurality of frames which are not only dominant in a single frame but which are also dominant over several frames over time are used to generate an overall dominant color histogram.

### SUMMARY OF THE INVENTION

It would be advantageous to have an improved dominant color descriptor relating to a plurality of images. To better address this concern, in a first aspect of the invention a system is presented according to independent claim 1.

The system as set forth computes a combined dominant color descriptor based on dominant colors of a collection of generated color values that were generated based on the dominant colors in the received dominant color descriptors. The combined dominant color descriptor may be used as an 'average' dominant color descriptor, for example in an image clustering algorithm. Some properties applying to the dominant colors of an image, such as for example independence on a color space used, also apply to the at least one dominant color included in the combined dominant color descriptor, as it is computed as a dominant color of the collection of generated color values.

Usually, up to 8 dominant colors of the collection of generated color values will be computed and included in the combined dominant color descriptor, as this is the number of dominant colors specified by the MPEG-7 standard.

According to an aspect of the invention, the means for generating the collection of generated color values is arranged for including in the collection at least one generated color value representing a dominant color in one of the received dominant color descriptors.

By including in the collection a generated color value representing a dominant color of one of the images, that dominant color is considered in the computation of the at least one dominant color for inclusion in the combined dominant color descriptor. The generated color value represents a dominant color. For example it can be an exact copy, or it can be perturbed by adding a random variable, or it can be transformed into any particular color space.

According to an aspect of the invention, a number of generated color values representing the dominant color in the one of the received dominant color descriptors depends on a percentage of the dominant color according to the one of the received dominant color descriptors.

The number of generated color values is for example linearly or at least monotonically, in particular non-decreasingly or increasingly, dependent on the percentage of the color in the dominant color descriptor. The percentage of a dominant color indicates a relative number of pixels contributing to that dominant color in an image. Using this embodiment, the dominant colors having a high percentage in one or more received dominant color descriptors will have a relatively high probability of being included in the combined dominant color descriptor. Also the percentage of a dominant color for inclusion in the combined dominant color descriptor may be based on the number of generated color values representing that dominant color. As an alternative to this embodiment, for example one generated color value may be included in the collection for each dominant color in the received dominant color descriptors. This alternative gives more emphasis to the number of images having a particular dominant color and less emphasis on the percentage of the particular dominant color.

According to an aspect of the invention, the means for generating the collection of generated color values is arranged for including in the collection a respective at least one generated color value for each respective received dominant color descriptor, where the respective at least one generated color value represents a dominant color in the respective received dominant color descriptor.

This way, each received dominant color descriptor contributes to the collection and to the combined dominant color descriptor.

According to an aspect of the invention, each dominant color in the received dominant color descriptors is represented by at least one generated color value.

By including in the collection generated color values representing all dominant colors appearing in the received dominant color descriptors, the combined dominant color descriptor takes into account all the color information appearing in the individual dominant color descriptors.

According to an aspect of the invention, the means for generating the collection of generated color values is arranged for including in the collection a plurality of generated color values associated with a dominant color appearing in one of the received dominant color descriptors, where the plurality of generated color values have a mean value according to the dominant color and a variance according to a dominant color variance.

An advantage of this aspect is that the dominant color variances in the combined dominant color description also are representative of the variances in the original images. This may be combined with other embodiments, for example, the number of generated color values may be (linearly) dependent on the percentage of the dominant color; and/or all dominant colors may be represented by such a plurality of generated color values.

According to an aspect of the invention, the means for computing at least one dominant color is arranged for computing the dominant color of the collection of generated color values according to an algorithm used to compute the dominant colors included in the received dominant color descriptors.

This way the properties of the combined dominant color descriptor closely match the properties of the dominant color descriptors of the individual images. This also has the advantage that the same hardware or software element can be used to compute the dominant color descriptor of individual images and the combined dominant color descriptor. If the hardware or software element is changed, the two types of dominant color descriptors are changed in the same way, keeping semantics of the two types of dominant color descriptors in line. This also makes the system relatively economic to realize.

An aspect of the invention comprises:
- means for computing a parameter indicative of a variance of the at least one dominant color of the collection of generated color values (IM), the parameter being for inclusion in the combined dominant color descriptor (DCD); and
- means for computing a percentage of the at least one dominant color of the collection of generated color values (IM), the percentage being for inclusion in the combined dominant color descriptor (DCD).

The parameter and the percentage are computed based on the collection of generated color values. For example using the same algorithms according to which the parameters and percentages of the dominant colors appearing in the received dominant color descriptors were computed. This makes the combined dominant color descriptor more complete.

An aspect of the invention comprises a method of computing a combined dominant color descriptor (DCD) of a plurality of images (IM 1, IM 2, IM n), the method comprising:
- identifying a plurality of respective predetermined dominant color descriptors (DCD 1, DCD 2, DCD n) of respective images of the plurality of images (IM 1, IM 2, IM n);
- generating a collection of generated color values (IM) based on dominant colors included in the received dominant color descriptors (DCD 1, DCD 2, DCD n); and
- computing at least one dominant color of the collection of generated color values (IM) for inclusion in the combined dominant color descriptor (DCD).

An aspect of the invention comprises instructions for causing a processor to perform the method set forth.

### BRIEF DESCRIPTION OF THE DRAWINGS

These and other aspects of the invention will be further elucidated and described with reference to the drawing, in which:
Figure 1 is a diagram illustrating aspects of the invention; and
Figure 2 is a diagram of an embodiment of the invention.

### DETAILED DESCRIPTION OF EMBODIMENTS

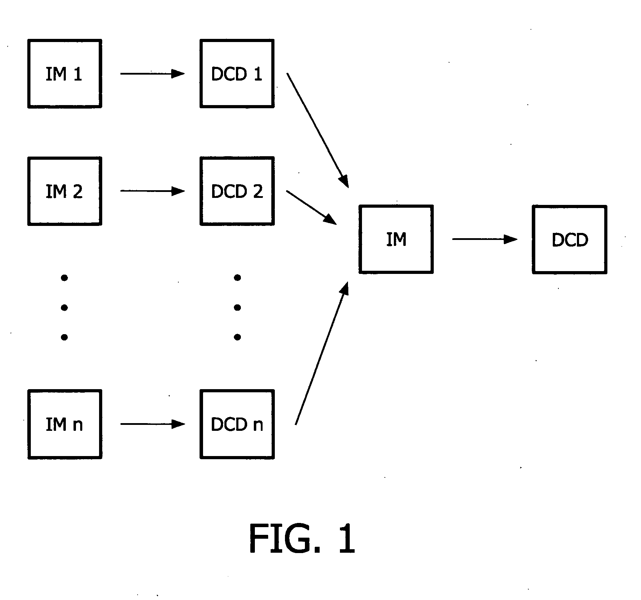

In an embodiment, a new image is created from all the Dominant Color descriptors in a cluster of images, based on their components and the corresponding percentages. This is illustrated in Figure 1. Consider a cluster of n images (IM 1, IM 2, ..., IM n in Figure 1) with corresponding dominant color descriptors (DCD 1, DCD 2, ..., DCD n). It would be desirable to have a single dominant color descriptor DCD that describes the dominant colors of the cluster of n images. This dominant color descriptor will be referred to as a combined dominant color descriptor. This can be realized as follows. A plurality of pixels can be based on the information comprised in the dominant color descriptors DCD 1, DCD 2, ..., DCD n. This plurality of generated pixels may be regarded as an artificial image IM. The plurality of pixels is analyzed as if it was just another image to obtain attributes of the combined dominant color descriptor. Some attributes may be obtained directly from the dominant color descriptors of the individual images.

In an embodiment, an artificial image IM is created with a size of 100 × n pixels. Each line contains 100 pixels, based on the components of the dominant color descriptors of the images. However, the shape of the new image does not matter. For example, a long line of 100n pixels could also be used as the new image. The pixels are generated as follows:

For i=1,..,.n, the i-th line contains the Dominant Colors of image i, where the number of pixels for each color is determined by its percentage. Say image i has m Dominant Colors c1, c2,..,cm, with percentages respectively p1, p2,..,pm. Then the i-th line of the new image contains p 1 pixels of color c1, p2 pixels of color c2,.,and pm pixels of color cm.

The combined Dominant Color descriptor of the cluster of images is based on the Dominant Color descriptor of the artificial image. Obviously the (typically up to 8) dominant colors of the artificial image are representative dominant colors of the images in the cluster, and the percentages also represent how many pixels in the images contribute to these Dominant Colors. Moreover, the variances of these dominant colors also represent the variance of the color within the cluster.

For the spatial coherency this does not hold, since in this embodiment, the distribution of the colors throughout the artificial image is arbitrary. Therefore, for the spatial coherency the average of the spatial coherencies of the images in the cluster is used. This makes more sense since it averages the distribution over the images, giving equal weight to each image. In an alternative embodiment, the artificial image is created such that the spatial coherencies of the generated pixels are in agreement with the coherencies of the dominant color descriptors.

In principle, equal weight is given to each image. The size of the individual images does not influence their weight in the computation of the combined dominant color descriptor. However, it is possible to assign different weights to the images. For example, the number of pixels generated for an image can be made dependent on the weight assigned to the image. A weight of 1 may correspond to 100 generated pixels, a weight of 2 then corresponds to 200 generated pixels, and so forth.

The number of generated pixels may be different. For example if the percentages are given with a sub-percentage precision in the dominant color descriptors, 1000 pixels could be generated for each image. The artificial image could then be of size 1000 × n.

The techniques presented herein will be very useful for any kind of clustering which may be (partly) based on MPEG-7 Dominant Color descriptors. For example, photo collection organization can be improved by using clusters of images labeled with their averaged dominant color descriptors. Such photo collection organization may be fully implemented in software, or partially in software and hardware, in devices such as regular personal computers, Media Centre PCs, photo displaying portable devices, and any other consumer electronics or professional devices that have the capability of storing/organizing/displaying photo collections. Another example use is in higher level semantic content analysis algorithms. The techniques can be applied not only to photos but also to any kind of visual frames (e.g., frames extracted from a video sequence) in order to e.g. temporally segment the video sequence in meaningful scenes.

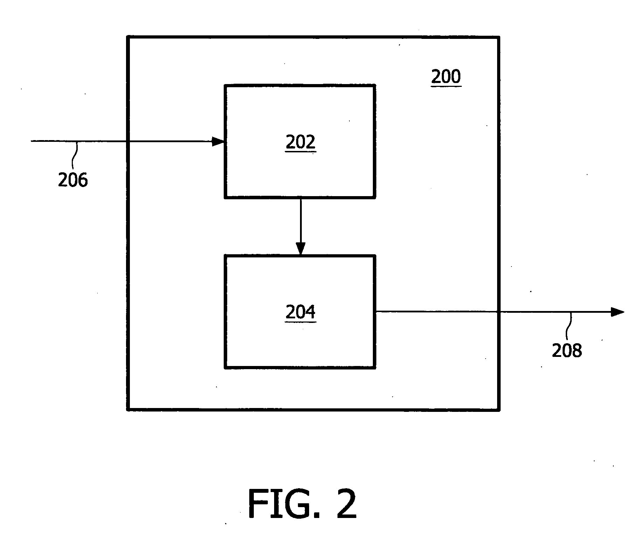

Figure 2 illustrates an embodiment of the invention. It illustrates a system 200 for computing a combined dominant color descriptor of a plurality of images. The system 200 has an input 206 for receiving dominant color descriptors of the individual images. The means 202 generates a collection of color values in dependence on the received dominant color descriptors. For example it generates a number of color values for each dominant color appearing in the received dominant color descriptors, and the number of generated color values representing each dominant color linearly depends on the percentage of the dominant color. The collection of generated color values is sent to a means 204 for computing a dominant color descriptor of a collection of color values. For example, by using a data structure of an image to store the collection of color values, means 204 may be a means for computing a dominant color descriptor of an image. The dominant colors, their variances, and their percentages are established based on the collection of color values. The spatial coherency is determined based directly on the spatial coherencies of the received dominant color descriptors. The combined dominant color descriptor so obtained is provided to output 208.

Although the embodiments and the combined dominant color descriptor has been explained herein in the context of MPEG-7, it will be apparent to the skilled person that the concept of dominant colors and the combined dominant color descriptor can be easily isolated from the MPEG-7 standard and can be used out of the context of MPEG-7 using a system similar to the embodiments described herein.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. The carrier may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system for computing a combined dominant color descriptor (DCD) of a plurality of images (IM 1, IM 2, IM n), the system comprising:
- an input (206) for receiving a plurality of respective dominant color descriptors (DCD 1, DCD 2, DCD n) of respective images of the plurality of images (IM 1, IM 2, IM n); **characterised by**
- means (202) for generating an image of generated color values (IM) based on dominant colors included in the received dominant color descriptors (DCD 1, DCD 2, DCD n), wherein pixels of the generated image are based on the dominant color descriptors (DCD 1, DCD 2, DCD n); and
- means (204) for computing at least one dominant color of the image of generated color values (IM) for inclusion in the combined dominant color descriptor (DCD), wherein the means (204) for computing is arranged for computing the dominant color of the image of generated color values (IM) according to an algorithm used to compute the dominant colors included in the received dominant color descriptors (DCD 1, DCD 2, DCD n).

2. The system according to claim 1, wherein the generated color values comprise a generated color pixels, and wherein spatial coherencies of the generated color pixels are in agreement with the coherencies of the dominant color descriptors.

3. The system according to claim 1, wherein the means for generating the image of generated color values is arranged for including in the image at least one generated color value representing a dominant color in one of the received dominant color descriptors.

4. The system according to claim 3, wherein a number of generated color pixels representing the dominant color in the one of the received dominant color descriptors depends on a percentage of the dominant color according to the one of the received dominant color descriptors.

5. The system according to claim 1, where the means for generating the image of generated color values is arranged for including in the image a respective at least one generated color value for each respective received dominant color descriptor, where the respective at least one generated color value represents a dominant color in the respective received dominant color descriptor.

6. The system according to claim 5, wherein each dominant color in the received dominant color descriptors is represented by at least one generated color value.

7. The system according to claim 1, wherein the means for generating the image of generated color values is arranged for including in the image a plurality of generated color values associated with a dominant color appearing in one of the received dominant color descriptors, where the plurality of generated color values have a mean value according to the dominant color and a variance according to a dominant color variance.

8. The system according to claim 1, further comprising:
- means for computing a parameter indicative of a variance of the at least one dominant color of the image of generated color values (IM), the parameter being for inclusion in the combined dominant color descriptor (DCD); and
- means for computing a percentage of the at least one dominant color of the image of generated color values (IM), the percentage being for inclusion in the combined dominant color descriptor (DCD).

9. A method of computing a combined dominant color descriptor (DCD) of a plurality of images (IM 1, IM 2, IM n), the method comprising:
- identifying a plurality of respective predetermined dominant color descriptors (DCD 1, DCD 2, DCD n) of respective images of the plurality of images (IM 1, IM 2, IM n);
**characterised by**
- generating an image of generated color values (IM) based on dominant colors included in the received dominant color descriptors (DCD 1, DCD 2, DCD n), wherein pixels of the generated image are based on the dominant color descriptors (DCD 1, DCD 2, DCD n); and
- computing at least one dominant color of the image of generated color values (IM) for inclusion in the combined dominant color descriptor (DCD) according to an algorithm used to compute the dominant colors included in the received dominant color descriptors (DCD 1, DCD 2, DCD n).

10. A computer program product comprising instructions for causing a processor to perform the method according to claim 9.

## Patentansprüche

1. System zur Berechnung eines kombinierte, dominierende Farben beschreibenden Deskriptors (DCD) einer Mehrzahl von Bildern (IM 1, IM 2, IM n), wobei das System umfasst:
- einen Eingang (206) zum Empfang einer Mehrzahl von jeweiligen, dominierende Farben beschreibenden Deskriptoren (DCD 1, DCD 2, DCD n) jeweiliger Bilder der Mehrzahl von Bildern (IM 1, IM 2, IM n);
**gekennzeichnet durch**
- Mittel (202), um auf der Grundlage dominierender Farben, die in den empfangenen Deskriptoren (DD 1, DCD 2, DCD n) für dominierende Farben enthalten sind, ein Bild aus generierten Farbwerten (IM) zu erzeugen; sowie
- Mittel (204), um zumindest eine dominierende Farbe des Bildes aus generierten Farbwerten (IM) zur Aufnahme in den Deskriptor (DCD) für kombinierte, dominierende Farben zu berechnen, wobei die Mittel (204) zur Berechnung vorgesehen sind, um die dominierende Farbe des Bildes aus generierten Farbwerten (IM) gemäß einem Algorithmus zu berechnen, der zur Berechnung der dominierenden Farben, die in den empfangenen Deskriptoren (DCD 1, DCD 2, DCD n) für dominierende Farben enthalten sind, verwendet wird.

2. System nach Anspruch 1, wobei die generierten Farbwerte erzeugte Farbpixel umfassen, und wobei räumliche Kohärenzen der erzeugten Farbpixel in Übereinstimmung mit den Kohärenzen der Deskriptoren für dominierende Farben sind.

3. System nach Anspruch 1, wobei die Mittel zur Erzeugung des Bildes aus generierten Farbwerten vorgesehen sind, um in das Bild mindestens einen generierten Farbwert aufzunehmen, der eine dominierende Farbe in einem der empfangenen Deskriptoren für dominierende Farben darstellt.

4. System nach Anspruch 3, wobei eine Anzahl von erzeugten Farbpixeln, welche die dominierende Farbe in einem der empfangenen Deskriptoren für dominierende Farben darstellt, von einem Prozentsatz der dominierenden Farbe entsprechend diesem der empfangenen Deskriptoren für dominierende Farben abhängig ist.

5. System nach Anspruch 1, wobei die Mittel zur Erzeugung des Bildes aus generierten Farbwerten vorgesehen sind, um in das Bild einen jeweiligen, mindestens einen generierten Farbwert für jeden jeweiligen empfangenen Deskriptor für dominierende Farben aufzunehmen, wobei der jeweilige, mindestens eine generierte Farbwert eine dominierende Farbe in dem jeweiligen empfangenen Deskriptor für dominierende Farben darstellt.

6. System nach Anspruch 5, wobei jede dominierende Farbe in dem empfangenen Deskriptor für dominierende Farben durch mindestens einen generierten Farbwert dargestellt ist.

7. System nach Anspruch 1, wobei die Mittel zur Erzeugung des Bildes aus generierten Farbwerten vorgesehen sind, um in das Bild eine Mehrzahl von generierten Farbwerten aufzunehmen, die einer in einem der empfangenen Deskriptoren für dominierende Farben vorkommenden, dominierenden Farbe zugeordnet sind, wobei die Mehrzahl von generierten Farbwerten einen Mittelwert entsprechend der dominierenden Farbe und eine Varianz entsprechend einer Varianz der dominierenden Farben aufweist.

8. System nach Anspruch 1, welches weiterhin umfasst:
- Mittel zur Berechnung eines Parameters, der für eine Varianz der mindestens einen dominierenden Farbe des Bildes aus generierten Farbwerten (IM) beispielhaft ist, wobei der Parameter zur Aufnahme in den Deskriptor (DCD) für kombinierte, dominierende Farben bestimmt ist; sowie
- Mittel zur Berechnung eines Prozentsatzes der mindestens einen dominierenden Farbe des Bildes aus generierten Farbwerten (IM), wobei der Prozentsatz zur Aufnahme in den Deskriptor (DCD) für kombinierte, dominierende Farben bestimmt ist.

9. Verfahren zur Berechnung eines kombinierte, dominierende Farben beschreibenden Deskriptors (DCD) einer Mehrzahl von Bildern (IM 1, IM 2, IM n), wobei das Verfahren die folgenden Schritte umfasst:
- Identifizieren einer Mehrzahl von jeweiligen, zuvor festgelegten, dominierende Farben beschreibenden Deskriptoren (DCD 1, DCD 2, DCD n) jeweiliger Bilder der Mehrzahl von Bildern (IM1, IM 2, IM n);
- Erzeugen eines Bildes aus generierten Farbwerten (IM) auf der Grundlage dominierender Farben, die in den empfangenen Deskriptoren (DCD 1, DCD 2, DCD n) für dominierende Farben enthalten sind, wobei Pixel des erzeugten Bildes auf den Deskriptoren (DCD 1, DCD 2, DCD n) für dominierende Farben basieren; sowie
- Berechnen von zumindest einer dominierenden Farbe des Bildes aus generierten Farbwerten (IM) zur Aufnahme in den Deskriptor (DCD) für kombinierte, dominierende Farben gemäß einem Algorithmus, der zur Berechnung der dominierenden Farben, die in den empfangenen Deskriptoren (DCD 1, DCD 2, DCD n) für dominierende Farben enthalten sind, verwendet wird.

10. Computerprogrammprodukt mit Anweisungen, um zu bewirken, dass ein Prozessor das Verfahren nach Anspruch 9 ausführt.

## Revendications

1. Système pour calculer un descripteur de couleurs dominantes (DCD) combiné d'une pluralité d'images (IM 1, IM 2, IM n), ledit système comprenant :
- une entrée (206) pour recevoir une pluralité de descripteurs de couleurs dominantes (DCD 1, DCD 2, DCD n) d'images respectives de la pluralité d'images (IM1, IM 2, IM n) ;
**caractérisée par** :
- un moyen (202) pour générer une image de valeurs de couleurs (IM) générées sur la base des couleurs dominantes incluses dans les descripteurs de couleurs dominantes (DCD 1, DCD 2, DCD n), dans lequel les pixels de l'image générée sont basés sur les descripteurs de couleurs dominantes (DCD 1, DCD 2, DCD n) ; et
- un moyen (204) pour calculer au moins une couleur dominante de l'image des valeurs de couleurs (IM) générées pour l'inclusion dans le descripteur de couleurs dominantes (DCD) combiné, dans lequel le moyen (204) de calcul est prévu pour calculer la couleur dominante de l'image de valeurs de couleurs (IM) générées selon un algorithme utilisé pour calculer les couleurs dominantes incluses dans les descripteurs de couleurs dominantes (DCD 1, DCD 2, DCD n) reçus.

2. Système selon la revendication 1, dans lequel les valeurs de couleurs générées comprennent des pixels de couleurs générées, et dans lequel les cohérences spatiales des pixels de couleurs générées sont en accord avec les cohérences des descripteurs de couleurs dominantes.

3. Système selon la revendication 1, dans lequel le moyen pour générer l'image des valeurs de couleurs générées est prévu pour inclure dans l'image au moins une valeur de couleur générée représentant une couleur dominante dans l'un des descripteurs de couleurs dominantes reçus.

4. Système selon la revendication 3, dans lequel plusieurs pixels de couleurs générées représentant la couleur dominante dans l'un des descripteurs de couleurs dominantes reçus dépendent d'un pourcentage de la couleur dominante selon celui des descripteurs de couleurs dominantes reçus.

5. Système selon la revendication 1, dans lequel le moyen pour générer l'image des valeurs de couleurs générées est prévu pour inclure dans l'image au moins une valeur de couleurs générée respective pour chaque descripteur de couleurs dominantes reçu respectif, dans lequel la au moins une valeur de couleurs générée respective représente une couleur dominante dans le descripteur de couleurs dominantes reçu respectif.

6. Système selon la revendication 5, dans lequel chaque couleur dominante dans les descripteurs de couleurs dominantes reçus est représentée par au moins une valeur de couleurs générée.

7. Système selon la revendication 1, dans lequel le moyen pour générer l'image de valeurs de couleurs générées est prévu pour inclure dans l'image une pluralité de valeurs de couleurs générées associées à une couleur dominante apparaissant dans l'un des descripteurs de couleurs dominantes reçus, dans lequel la pluralité de valeurs de couleurs générées comprend une valeur moyenne selon la couleur dominante et une variance selon la variance de la couleur dominante.

8. Système selon la revendication 1, comprenant également :
- un moyen pour calculer un paramètre indicatif d'une variance de la au moins une couleur dominante de l'image des valeurs de couleurs (IM) générées, le paramètre étant destiné à l'inclusion dans le descripteur de couleurs dominantes (DCD) combiné ; et
- un moyen pour calculer un pourcentage de la au moins une couleur dominante de l'image de valeurs de couleurs (IM) générées, le pourcentage étant destiné à l'inclusion dans le descripteur de couleurs dominantes (DCD) combiné.

9. Procédé de calcul d'un descripteur de couleurs dominantes (DCD) combiné d'une pluralité d'images (IM 1, IM 2, IM n), ledit procédé comprenant :
- l'identification d'une pluralité de descripteurs de couleurs dominantes (DCD 1, DCD 2, DCD n) prédéterminés d'images respectives de la pluralité d'images (IM 1, IM 2, IM n) ; **caractérisée par** :
- la génération d'une image de valeurs de couleurs (IM) générées sur la base des couleurs dominantes incluses dans les descripteurs de couleurs dominantes (DCD 1, DCD 2, DCD n), dans laquelle les pixels de l'image générée sont basés sur les descripteurs de couleurs dominantes (DCD 1, DCD 2, DCD n) ; et
- le calcul d'au moins une couleur dominante de l'image des valeurs de couleurs (IM) générées pour l'inclusion dans le descripteur de couleurs dominantes (DCD) combiné selon un algorithme utilisé pour calculer les couleurs dominantes incluses dans les descripteurs de couleurs dominantes (DCD 1, DCD 2, DCD n) reçus.

10. Programme informatique comprenant des instructions pour faire exécuter à un processeur le procédé selon la revendication 9.
